# EUROPÄISCHE PATENTSCHRIFT

(11) **EP 1 473 508 B1**
(45) Veröffentlichungstag und Bekanntmachung des Hinweises auf die Patenterteilung: **21.03.2012**
(21) Anmeldenummer: 03009641.6
(22) Anmeldetag: 29.04.2003
(51) Int. Cl.: F16M 11/04

(54) **Stativkopf für ein medizinisches Deckenstativ mit einer Haltevorrichtung**
Support head for a medical ceiling mount with a holding device
Tête de support pour un support de plafond médical avec dispositif d'attache

(43) Veröffentlichungstag der Anmeldung: 03.11.2004
(73) Patentinhaber: TRUMPF Medizin Systeme GmbH + Co. KG, 07318 Saalfeld (DE)
(72) Erfinder: Müller, Peter, 85655 Grosshelfendorf (DE); Lechmeier, Hermann, 81375 München (DE); Hiemer, Willibald, 81245 München (DE)
(74) Vertreter: Hofer, Dorothea

(56) Entgegenhaltungen:
- US-A- 4 468 803
- US-A- 5 108 064
- US-A- 5 527 125
- US-A- 5 671 900
- US-A- 5 687 945
- US-B1- 6 196 649

## Beschreibung

Die vorliegende Erfindung bezieht sich auf einen Stativkopf für ein medizinisches Deckenstativ, insbesondere auf einen Stativkopf mit einer Haltevorrichtung, siehe zum Beispiel die US-B-6196649.

Es sind medizinische Deckenstative bekannt, die zur hängenden Aufnahme von medizinischen Geräten, wie beispielsweise Überwachungsmonitoren, Beatmungssystemen, Spritzenpumpen etc. dienen. Sie werden beispielsweise in Operationssälen oder Intensivräumen etc. für die Unterbringung der für Operationen, die Intensivpflege bzw. Untersuchung eines Patienten notwendigen Systeme verwendet.

Deckenstative bestehen aus mindestens einer vertikalen Säule oder einem horizontalen schwenkbaren Arm mit einer vertikalen Säule, die über eine Drehverbindung drehbar an der Decke befestigt sind, und einem Geräteträger, auch Stativkopf genannt, in dem die notwendigen Anschlüsse und Geräte untergebracht sind. Durch den drehbar gelagerten Arm läßt sich der Stativkopf in einem gewünschten Radius verschwenken, wodurch der Zugang zum Patienten erleichtert wird oder eine ergonomische Arbeitsposition eingestellt werden kann. Der Stativkopf weist eine Vorderseite auf, von der aus die auf dem Stativkopf aufgestellten Geräte bedient werden und die Anschlüsse für Leitungen bzw. Schläuche zu und vom Patienten zugänglich sind. An Seitenflächen des Stativkopfs sind Haltevorrichtungen befestigt, die aus einem oder mehreren Armelement/en besteht/bestehen. Am Ende eines Armelementes ist eine Bohrung vorgesehen, durch die beispielsweise eine Befestigungsstange gesteckt und in einer gewünschten Position fixierbar ist, an die beispielsweise Spritzenpumpen befestigt werden. Die Haltevorrichtungen sind verstellbar ausgebildet, so daß die Spritzenpumpen je nach Platzverhältnis möglichst eng an dem Stativkopf angeordnet werden können. Um die Verstellbarkeit zu ermöglichen, sind in den Armelementen Langlöcher vorgesehen. Die Armelemente sind übereinander angeordnet und so aneinander ausgerichtet, daß sich zumindest ein Teil der Langlöcher überlappt. Spezialschraubenbolzen werden durch die Langlöcher gesteckt. Die beiden Armelemente werden dann in die gewünschte Position gebracht und anschließend mittels einer Flügelmutter geklemmt, die auf den Schraubenbolzen aufgeschraubt wird. Die Armelemente bestehen aus Metall, vorzugsweise aus Aluminiumguß. Sie werden eloxiert oder pulverbeschichtet.

Diese Haltevorrichtungen müssen eine gewisse elektrische Ableitfähigkeit gewährleisten, damit sich keine Spannungspotentiale aufbauen können, die u.U. zu Übersprungsfunken oder gar zur Gefährdung des Patienten oder des medizinischen Personals führen könnten. Außerdem muß sichergestellt sein, daß für den Fall, daß ein an der Haltevorrichtung befestigtes fehlerhaftes Gerät eine Spannung auf die Haltevorrichtung ableitet, diese Spannung umgehend abfließen kann. Da die Armelemente eloxiert oder pulverbeschichtet sind, ist die Außenfläche jedoch isoliert und kann keine Spannung ableiten. Um dieses Problem zu lösen, kann ein separates Erdungskabel vorgesehen werden, das das an der Haltevorrichtung befestigte Gerät mit einer leitenden Stelle des Stativkopfs verbindet. Diese Lösung ist jedoch nicht optimal, da zum Einen die Gefahr des Abreissens des Erdungskabels besteht, und zum Anderen die hygienischen Bedingungen des Stativkopfs verschlechtert werden, da sich das Erdungskabel und dessen Anschlüsse schlecht reinigen lassen. Alternativ wäre es möglich, dieses Problem zu beseitigen, indem die Oberfläche leitfähig gestaltet wird. Dies kann beispielsweise durch ein Verchromen der Oberfläche der Armelemente realisiert werden. Das Verchromen ist jedoch sehr kostenintensiv und daher ungeeignet.

Es ist daher Aufgabe der vorliegenden Erfindung, ein medizinisches Deckenstativ mit einem Stativkopf mit einer verbesserten verstellbaren Haltevorrichtung bereitzustellen, die elektrisch leitfähig ausgebildet ist.

Diese Aufgabe wird mit einem medizinischem Deckenstativ mit einem Stativkopf gemäß Anspruch 1 gelöst.

Vorteilhafte Weiterbildungen sind Gegenstand der Unteransprüche.

Nachfolgend wird die Erfindung anhand einer derzeit bevorzugten Ausführungsform unter Bezugnahme auf die beigefügten Figuren näher erläutert.

Fig. 1 ist eine perspektivische Gesamtdarstellung eines medizinischen Deckenstativs.

Fig. 2 ist eine Schnittansicht einer erfindungsgemäßen Haltevorrichtung aus Fig. 1.

Fig. 3 ist eine perspektivische Ansicht einer erfindungsgemäßen Haltevorrichtung mit Deckelelementen.

Fig. 4 ist eine perspektivische Ansicht einer erfindungsgemäβen Haltevorrichtung ohne Deckelelemente.

Fig. 5 ist eine perspektivische Ansicht eines Deckelelements alleine.

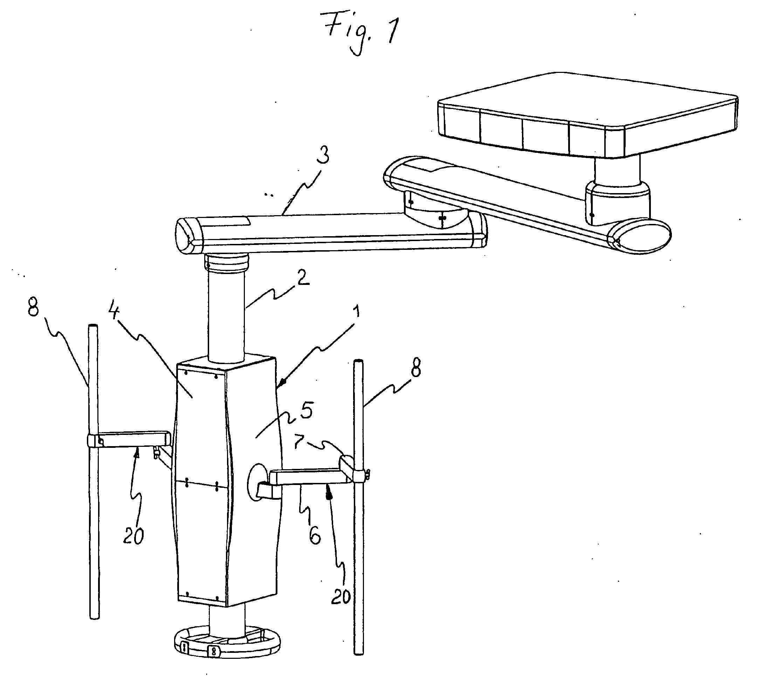

Gemäß Fig. 1 weist ein Deckenstativ einen Stativkopf 1 auf, der an einer vertikalen Säule 2 befestigt ist. Die Säule 2 ist wiederum an einem horizontalen schwenkbaren Arm 3 befestigt. Der Arm 3 ist über eine Drehverbindung drehbar mit einem weiteren horizontalen schwenkbaren Arm verbunden und letzterer ist über eine Drehverbindung und ein kurzes vertikales Säulenstück an einer Deckenaufnahme angebracht.

Der Stativkopf 1 weist eine Vorderseite 4 auf, die mit Steckdosen und Anschlüssen für Strom und medizinische Gase ausgestattet ist, die in Fig. 1 allerdings nicht dargestellt sind. An Seitenflächen 5 des Stativkopfs 1 sind Haltevorrichtungen 20 befestigt, die ein inneres Armelement 6 und ein äußeres Armelement 7 aufweisen. Im äußersten Ende des äußeren Armelementes 7 ist eine Befestigungsstange 8 montiert, an die Geräte wie beispielsweise Spritzenpumpen etc. aufgesteckt und daran fixiert werden können.

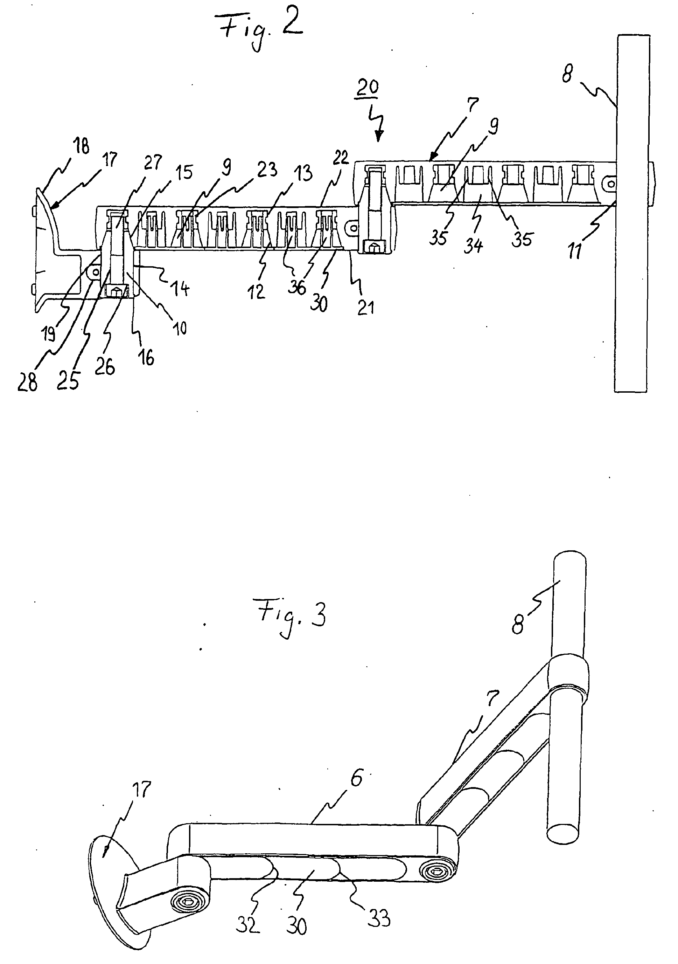

Im Folgenden wird der detaillierte Aufbau der Haltevorrichtung 20 unter Bezugnahme auf Fig. 2 näher erläutert. Jedes der beiden Armelemente 6, 7 ist gleich aufgebaut, so daß die Beschreibung des Armelementes 6 ebenso auf das Armelement 7 zutrifft. In Fig. 2 ist zur Verdeutlichung des Aufbaus der Armelemente das Armelement 6.mit montierten Deckelelementen 30 dargestellt, während das Armelement 7 ohne Deckelelemente 30 dargestellt ist. Das Armelement 6 ist als längliche Stange ausgebildet mit einer Oberseite 22 und einer Unterseite 21. In der Unterseite 21 sind mehrere, hier vier, sich in Richtung Oberseite 22 erstreckende Aufnahmeöffnungen 9 als Sacklöcher ausgebildet. Sie weisen von der Unterseite 21 beginnend einen sich in Richtung Oberseite 22 hin verjüngenden kegeligen Abschnitt 12 auf, an den sich weiter ein zylindrischer Abschnitt 13 anschließt. In dem zylindrischen Abschnitt 13 befindet sich ein Gewindeeinsatz 23. Es kann aber auch der zylindrische Abschnitt 13 selbst mit einem Innengewinde versehen werden. Die vier Aufnahmeöffnungen 9 bilden ein Löcherraster. An einem Ende weist das Armelement 6 eine Durchgangsbohrung 24 auf. Zwischen jeweils zwei Aufnahmeöffnungen 9 sind Sacklöcher 34 ausgebildet. Diese weisen an ihrem Ende Zungenelemente 35 auf, die in etwa der Höhe des zylindrischen Abschnitts 13 der Aufnahmeöffnungen 9 entsprechen. Die Sacklöcher 34 und die Zungenelemente 35 dienen zur Gewichtseinsparung und zum Befestigen der Deckelelemente 30 wie später noch erläutert wird.

Ferner ist ein Bolzen 10 zur Verbindung des Armelementes 6 entweder mit einer an der Seite 5 des Stativkopfes 1 befestigten Befestigungskonsole 17 oder mit einem weiteren Armelement 7 vorgesehen. In Fig. 2 sind zwei Bolzen 10 dargestellt, einer zur Verbindung des Armelementes 6 mit der Befestigungskonsole 17, der andere zur Verbindung des Armelementes 6 mit dem Armelement 7. Der Bolzen 10 weist einen zylindrischen Abschnitt 14 und einen sich daran anschließenden kegelstumpfförmigen Abschnitt 15 auf. Am freien Ende des zylindrischen Abschnitts 14 schließt sich ein Bund 16 an, dessen Außendurchmesser größer als der Durchmesser des zylindrischen Abschnitts 14 des Bolzens 10 ist. Axial mittig ist in dem Bolzen 10 eine Durchgangsbohrung 25 vorgesehen. Die Durchgangsbohrung 25 besitzt an der zum Bund 16 angrenzenden Seite einen Absatz 26, mit einem größerem Durchmesser als der Durchmesser der Durchgangsbohrung 25. Der Bolzen 10 ist aus Edelstahl gefertigt. Durch die Durchgangsbohrung 25 ist ein Schraubenbolzen 27 gesteckt, dessen Kopf an dem Absatz 26 bündig zum Bund 16 angeordnet ist. Die Länge des Schraubenbolzens 27 ist so bemessen, daß er über den Bolzen 10 hinausragt. An seinem freien Ende ist er mit seinem Außengewinde in den Gewindeeinsatz 23 eingeschraubt. Beim Einschrauben in den Gewindeeinsatz 23 wird der Bolzen 10 in den kegeligen Abschnitt 12 des Sackloches gezogen und die Außenoberfläche des kegelstumpfförmigen Abschnitts 15 des Bolzens 10 wird gegen die Innenoberfläche des kegeligen Abschnitts 12 gepreßt. Diese Konstruktion erlaubt größere Fertigungstoleranzen der einzelnen Teile, da der Bolzen 10 beim Einschrauben in das Sackloch durch die kegeligen Flächen spielfrei zentriert wird.

Ein weiterer Vorteil der kegeligen Fläche liegt in der günstigeren Krafteinleitung, wenn der Arm 6 durch das Gewicht des Armes 7, der Befestigungsstange 8 und daran fixierten Geräten wie beispielsweise einer Spritzenpumpe (nicht gezeigt), belastet wird.

Der Bolzen 10 selbst wird über einen hier nicht näher erläuterten Klemmechanismus 28 drehfest fixiert, sobald der Klemmechanismus 28 den Bolzen 10 festklemmt.

Die Einstellung und Montage der Armelemente 6, 7 geschieht folgendermaßen: Zunächst wird je nach räumlichen Gegebenheiten festgestellt, wie lang das Armelement 6 zur Seite oder nach vorne vorstehen soll. In Abhängigkeit davon wird die am besten geeignete Aufnahmeöffnung 9 aus dem Raster von vier Aufnahmeöffnungen des Armelementes 6 ausgewählt und mit dem Bolzen 10, der durch die Durchgangsbohrung 19 gesteckt wird, an der Befestigungskonsole 17 befestigt. In der vorliegenden Ausführungsform wird die äußerste Aufnahmeöffnung 9 gewählt. Die Befestigung des Armelementes 6 an der Befestigungskonsole 17 erfolgt durch Einschrauben des durch die in dem Bolzen 10 vorgesehene Durchgangsbohrung 25 gesteckten Schraubenbolzens 27 in den in der Aufnahmeöffnung 9 vorgesehenen Gewindeeinsatz 23. Beim Anziehen des Schraubenbolzens 27 wird die Außenoberfläche des kegelstumpfförmigen Abschnitts 15 gegen die kegelige Fläche des kegeligen Abschnitts 12 der Aufnahmeöffnung gepreßt und drehfest fixiert. Anschließend wird das Armelement 6 in die gewünschte Position hinsichtlich des Stativkopfs 1 gedreht. Die endgültige Fixierung des Armelementes in dieser Position erfolgt über das Festklemmen einer hier nur angedeuteten Klemmvorrichtung 28, die den Bolzen 10 in der Durchgangsbohrung 19 festklemmt. Die Klemmvorrichtung 28 weist eine sich quer zur Durchgangsbohrung 19 erstreckende und diese schneidende Öffnung auf, sowie Klemmelemente, die in der Öffnung angeordnet sind und mittels einer Schraube gegen den Bolzen 10 geklemmt werden, so daß der Bolzen in der Durchgangsbohrung 19 drehfest fixierbar ist.

Die Befestigung des zweiten Armelementes 7 am ersten Armelement 6 erfolgt auf gleiche Art und Weise, so daß deren Beschreibung hier weggelassen werden kann.

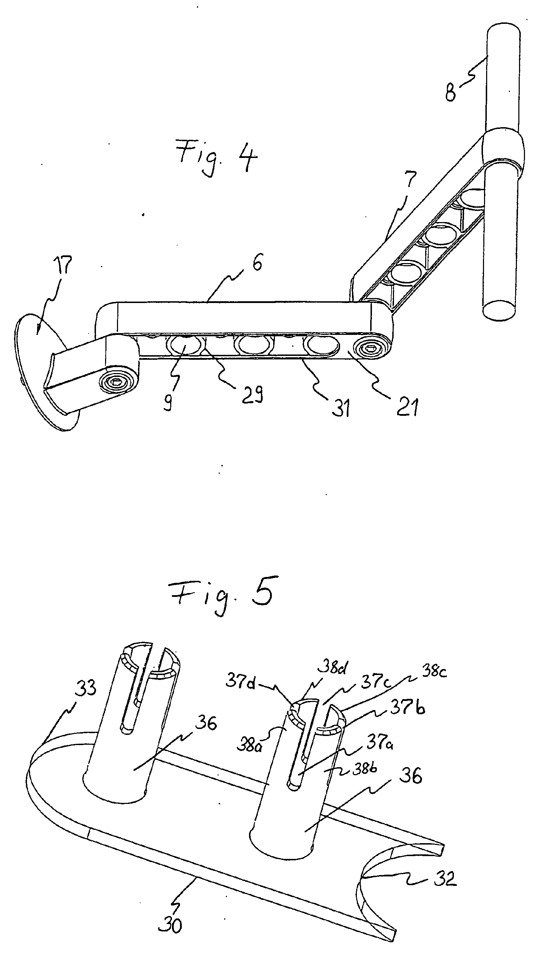

Das Armelement wird im Kokillenguß aus Aluminium hergestellt. Wie in Fig. 4 gezeigt ist, ist jedes Armelement 6, 7 innen weitgehend hohl ausgebildet, um Gewicht und Material einzusparen. Die Aufnahmelöcher 9 sind jeweils in zylindrischen Formabschnitten 29 ausgebildet. Am Umfang der Unterseite 21 entlang ist eine Vertiefung 31 vorgesehen, die als umlaufender gestufter Absatz ausgebildet ist.

Wie in Fig. 3 gezeigt ist, wird die offenen Unterseite 21 des Armelements 6, 7 durch mehrere Deckelelemente 30 abgedeckt, die in die Vertiefung 31 eingepaßt sind. Die Abdeckung erfolgt über mehrere Deckelelemente 30, die zusammengesetzt werden können, um die gesamte offene Unterseite 21 abdecken zu können. In Fig. 3 sind je drei Deckelelemente 30 vorgesehen, die jeweils an einer Seite (hier an der linken Seite) einen konkaven Abschnitt 32 aufweisen, der ca. einem Halbkreis mit dem Außendurchmesser der Aufnahmeöffnung 9 entspricht. Auf der anderen Seite (hier der rechten Seite) weist das Deckelelement 30 einen konvexen Abschnitt 33 auf, der ebenfalls ca. einem Halbkreis mit dem Außendurchmesser des Sacklochs entspricht. Auf diese Art und Weise kann die Unterseite 21 vollständig abgedeckt werden, und zwar unabhängig davon, in welche Aufnahmeöffnung 9 der Bolzen 10 gesteckt wird. Es wird dann einfach das entsprechende Deckelelement 30 entfernt und die übrigen Deckelelemente 30 werden so eingelegt, daß sie den Rest der Unterseite 21 abdecken können. Die Deckelelemente sind aus Kunststoff hergestellt und werden einfach in die Gewindeeinsätze 23 und Sacklöcher 34 eingeclipst. Der Aufbau des Deckelelements 30 ist in Fig. 5 näher dargestellt. Auf der im eingebauten Zustand dem Armelement 6, 7 zugewandten Seite sind zwei zylindrische Stifte 36 vorgesehen. Diese weisen jeweils vier vom freien Ende des zylindrischen Stifts 36 aus in Axialrichtung des zylindrischen Stifts verlaufende Schlitze 37a-d auf. Dadurch werden zwischen den Schlitzen elastische Abschnitte 38a-d gebildet.

Beim Aufstecken der Deckelelemente 30 auf die Armelemente 6, 7 werden die zylindrischen Stifte 36 sowohl in die Aufnahmeöffnungen 9 als auch in die Sacklöcher 34 gesteckt. Die elastischen Abschnitte 38a-d werden dabei einerseits in die Gewindeeinsätze 23 und andererseits zwischen der inneren Umfangswand des Sacklochs und den Zungenelementen 35 eingeschoben.

Die Armelemente 6, 7 werden außen wie gewöhnlich eloxiert oder pulverbeschichtet. Dabei wird das Innere durch Deckelelemente ähnlich zu den vorbeschriebenen Deckelelementen abgedeckt, so daß es unbehandelt bleibt. Dadurch bleibt die elektrische Leitfähigkeit des Armelementes 6, 7 im Inneren erhalten. Die Ableitung einer eventuell auftretenden Spannung erfolgt dann über das Armelement und den darin eingeschraubten Bolzen 10.

## Patentansprüche

1. Medizinisches Deckenstativ, aüfweisend einen mit einer Haltevorrichtung (1) mit mindestens einem länglichen Armelement (6, 7) aus elektrisch leitfähigem Material, das entlang seiner Längserstreckung mehrere Aufnahmeöffnungen (9) aufweist, sowie mit einem Bolzen (10) aus elektrisch leitfähigem Material, der in einer beliebigen Aufnahmeöffnung (9) befestigbar ist.

2. Medizinisches Deckenstativ gemäß Anspruch 1, wobei an einem Ende des Armelements (6, 7) eine Durchgangsbohrung (11) ausgebildet ist.

3. Medizinisches Deckenstativ gemäß Anspruch 1 oder 2, wobei jede Aufnahmeöffnung (9) als Sackloch ausgebildet ist.

4. Medizinisches Deckenstativ gemäß einem der vorhergehenden Ansprüche, wobei die Aufnahmeöffnung (9) einen an der Außenseite angrenzenden und sich nach innen verjüngenden kegeligen Abschnitt (12) sowie einen sich daran nach innen anschließenden zylindrischen Abschnitt (13) aufweist.

5. Medizinisches Deckenstativ gemäß dem vorhergehenden Anspruch, wobei der zylindrische Abschnitt (13) ein Innengewinde (23) aufweist.

6. Medizinisches Deckenstativ gemäß einem der vorhergehenden Ansprüche, wobei der Bolzen (10) einen zylindrischen Abschnitt (14) und einen daran angrenzenden und sich im Durchmesser verjüngenden kegelstumpfförmigen Abschnitt (15) aufweist.

7. Medizinisches Deckenstativ gemäß dem vorhergehenden Anspruch, wobei der Bolzen (10) an dem dem kegelstumpfförmigen Abschnitt (15) gegenüberliegenden Abschnitt einen Bund (16) aufweist.

8. Medizinisches Deckenstativ gemäß einem der vorhergehenden Ansprüche 5 bis 7, wobei der Bolzen (10) eine Durchgangsbohrung (25) aufweist, sowie einen Schraubenbolzen (27), der durch die Durchgangsbohrung (25) gesteckt und in dem Innengewinde (23) eingeschraubt ist.

9. Medizinisches Deckenstativ gemäß einem der vorhergehenden Ansprüche, mit einer Befestigungskonsole (17) zur Befestigung der Haltevorrichtung (1) an der Seite (5) des Stativkopfes (1), die einen Befestigungsflansch (18) und eine dem Bolzen (10) entsprechende Durchgangsbohrung (19) aufweist.

10. Medizinisches Deckenstativ gemäß dem vorhergehenden Anspruch, wobei die Befestigungskonsole (18) und/oder das Armelement (6, 7) eine sich quer zur Durchgangsbohrung (19) erstreckende und diese schneidende Öffnung aufweist, sowie Klemmelemente, die in der Öffnung angeordnet sind und mittels einer Schraube gegen den Bolzen (10) geklemmt werden, so daß der Bolzen (10) in der Durchgangsbohrung (19) drehfest fixierbar ist.

11. Medizinisches Deckenstativ gemäß einem der vorhergehenden Ansprüche, wobei das Armelement (6, 7) eine Unterseite (21) aufweist, die eine um alle Aufnahmeöffnungen (9) laufende Vertiefung (31) besitzt.

12. Medizinisches Deckenstativ gemäß dem vorhergehenden Anspruch, mit einer die Vertiefung (31) abdeckbaren Abdeckung aus mehreren Dekkelelementen (30) mit jeweils einer dem Abstand von einer Aufnahmeöffnung (9) zur angrenzenden Aufnahmeöffnung (9) entsprechenden Länge und einem halbkreisförmigen konkaven Abschnitt (32) an einem Ende und einem halbkreisförmigen konvexen Abschnitt (33) am anderen Ende, die jeweils einen Durchmesser besitzen, der demjenigen der Aufnahmeöffnungen (9) entspricht.

13. Medizinisches Deckenstativ gemäß dem vorhergehenden Anspruch, wobei das Deckelelement (30) auf der einer Aufnahmeöffnung (9) zugewandten Seite mindestens einen abstehenden zylindrischen Stift (36) aufweist, der an seinem freien Ende mindestens einen sich in Achsialrichtung des Zylinders verlaufenden Schlitz (37) aufweist.

14. Medizinisches Deckenstativ gemäß einem der vorhergehenden Ansprüche, wobei das Armelement (6, 7) außen pulverbeschichtet oder eloxiert ist, während die Aufnahmeöffnungen (9) nicht bzw. so behandelt sind, daß sie elektrisch leitfähig sind.

## Claims

1. Medical ceiling mount comprising a support head with a holding device (1) having at least one longitudinal arm member (6, 7) made of an electrically conductive material, comprising multiple accommodation orifices (9) along its longitudinal extension and a bolt (10) made of an electrically conductive material, fixable in an arbitrary accommodation orifice (9).

2. Medical ceiling mount according to claim 1, wherein a through-hole (11) is formed at an end of the arm member (6, 7).

3. Medical ceiling mount according to claim 1 or 2, wherein each accommodation orifice (9) is formed as a blind hole.

4. Medical ceiling mount according to any of the preceding claims, wherein the accommodation orifice (9) comprises an inwardly tapered conical portion (12) adjacent to the outside as well as a cylindrical portion (13) following inwardly to the conical portion.

5. Medical ceiling mount according the preceding claim, wherein the cylindrical portion (13) comprises an internal thread (23).

6. Medical ceiling mount according to any of the preceding claims, wherein the bolt (10) comprises a cylindrical portion (14) and an adjacent frustoconical portion (15) with a tapered diameter.

7. Medical ceiling mount according to the preceding claim, wherein the bolt (10) comprises a collar (16) at the portion opposite to the frustoconical portion (15).

8. Medical ceiling mount according to any of the preceding claims 5 to 7, wherein the bolt (10) comprises a through hole (25) and a screw bolt (27) stuck through the through hole (25) and screwed into the internal thread (23).

9. Medical ceiling mount according to any of the preceding claims with a fixing console (17) for fixing the holding device (1) at the side (5) of the support head (1), the fixing console comprising a fixing flange (18) and a through hole (19) corresponding to the bolt (10).

10. Medical ceiling mount according to the preceding claim, wherein the fixing console (18) and/or the arm member (6, 7) comprises an orifice extending transverse with regard to the through hole (19) and intersecting the through hole, and clamping members arranged in the orifice and clamped against the bolt (10) by means of a screw so that the bolt (10) is fixed in a torque-proof manner in the through hole (19).

11. Medical ceiling mount according to any of the preceding claims, wherein the arm member (6, 7) comprises an underside (21) having a recess (31) running around all accommodation orifices (9).

12. Medical ceiling mount according to the preceding claim, with a cover covering the recess (31), made of multiple lid members (30) having a length corresponding respectively to the distance from one accommodation orifice (9) to the adjacent accommodation orifice (9), and a semicircular concave portion (32) at one end and a semicircular convex portion (33) at the other end respectively having a diameter corresponding to that of the accommodation orifices (9).

13. Medical ceiling mount according to the preceding claim, wherein the lid member (30) comprises at least one protruding cylindrical pin (36) at the side facing the accommodation orifice (9), the pin comprising at least one slit (37) extending in the axial direction of the cylinder.

14. Medical ceiling mount according to any of the preceding claims, wherein the arm member (6, 7) is outside powder coated or anodized, whereas the accommodation orifices (9) are either not treated or treated such that they are electrically conductive.

## Revendications

1. Support de plafond médical comportant une tête de support avec un dispositif de maintien (1) pourvu d'au moins un élément de bras (6, 7) oblong en matériau électriquement conducteur, lequel présente plusieurs ouvertures de réception (9) sur son extension longitudinale, ainsi que d'un axe (10) en matériau électriquement conducteur, lequel peut être fixé dans une ouverture de réception (9) quelconque.

2. Support de plafond médical selon la revendication 1, où un alésage débouchant (11) est réalisé à une extrémité de l'élément de bras (6, 7).

3. Support de plafond médical selon la revendication 1 ou la revendication 2, où chaque ouverture de réception (9) est réalisée comme trou borgne.

4. Support de plafond médical selon l'une des revendications précédentes, où l'ouverture de réception (9) présente une partie conique (12) adjacente à son côté extérieur et qui se rétrécit vers l'intérieur, ainsi qu'une partie cylindrique (13) dans le prolongement de la précédente vers l'intérieur.

5. Support de plafond médical selon la revendication précédente, où la partie cylindrique (13) est pourvue d'un filet femelle (23).

6. Support de plafond médical selon l'une des revendications précédentes, où l'axe (10) présente une partie cylindrique (14) et partie tronconique (15) adjacente à celle-ci et dont le diamètre va rétrécissant.

7. Support de plafond médical selon la revendication précédente, où l'axe (10) présente un épaulement (16) sur la partie opposée à la partie tronconique (15).

8. Support de plafond médical selon l'une des revendications 5 à 7, où l'axe (10) comporte un alésage débouchant (25) ainsi qu'un boulon fileté (27) qui est fiché dans l'alésage débouchant (25) et vissé dans le filet femelle (23).

9. Support de plafond médical selon l'une des revendications précédentes, avec une console de fixation (17) pour la fixation du dispositif de maintien (1) sur le côté (5) du support de plafond médical (1), laquelle comporte une bride de fixation (18) et un alésage débouchant (19) correspondant à l'axe (10).

10. Support de plafond médical selon la revendication précédente, où la console de fixation (18) et/ou l'élément de bras (6, 7) comportent une ouverture s'étendant transversalement à l'alésage débouchant (19) et coupant celui-ci, ainsi que des éléments de serrage disposés dans l'ouverture et qui sont serrés au moyen d'une vis contre l'axe (10), de telle manière que l'axe (10) puisse être fixé de manière non rotative dans l'alésage débouchant (19).

11. Support de plafond médical selon l'une des revendications précédentes, où l'élément de bras (6, 7) présente une face inférieure (21) pourvue d'un évidement (31) ménagé autour de toutes les ouvertures de réception (9).

12. Support de plafond médical selon la revendication précédente, avec un couvercle formé de plusieurs éléments de couvercle (30) pouvant recouvrir l'évidement (31), ayant chacun une longueur correspondant à l'espacement entre une ouverture de réception (9) et l'ouverture de réception (9) contiguë, et une partie (32) en demi-cercle concave à une extrémité et une partie (33) en demi-cercle convexe à l'autre extrémité, lesdites parties présentant chacune un diamètre correspondant au diamètre des ouvertures de réception (9).

13. Support de plafond médical selon la revendication précédente, où l'élément de couvercle (30) comporte sur la face opposée à une ouverture de réception (9) au moins une cheville (36) cylindrique dressée, laquelle présente à son extrémité libre au moins une fente (37) s'étendant dans la direction axiale du cylindre.

14. Support de plafond médical selon l'une des revendications précédentes, où l'élément de bras (6, 7) est extérieurement revêtu par poudrage ou anodisé, alors que les ouvertures de réception (9) ne sont pas traitées, où le sont de manière à être électriquement conductrices.
